# EUROPEAN PATENT APPLICATION

(11) **EP 1 453 332 A1**
(43) Date of publication of application: **01.09.2004**
(21) Application number: 04001684.2
(22) Date of filing: 27.01.2004
(51) Int. Cl.: H04Q 7/32

(54) **Automatically deleting obsolete information in a wireless communication apparatus**

(30) Priority: 28.02.2003 JP 2003053814
(71) Applicant: Kabushiki Kaisha Toshiba, Tokyo (JP)
(72) Inventor: Kakui, Shingo, 1-chome Minato-ku Tokyo 105-8001 (JP)
(74) Representative: Henkel, Feiler & Hänzel

(57) **Abstract**

Disclosed is a communication device (10) including a portable terminal having a wireless communication function. The communication device (10) receives category information and associated information from an information providing apparatus (20) located at a relatively short distance to store both pieces of the information in an internal memory (107). The communication device (10) deletes information received prior to the latest point of time of reception from the internal memory (107).

## Description

The present invention generally relates to a communication device for receiving information through wireless communication, and in particular, relates to a technique to manage information.

Recently, portable communication devices such as mobile phones or personal digital assistants (PDAs) are in widespread use. In these communication devices, there are provided functions in which the wireless communication can be used to receive a wide variety of information from information providing systems using a wireless communication function, and the information can be employed using software.

Specifically, a portable terminal is proposed in which there is provided a function to receive geographical information and use it (e.g., see Jpn. Pat. Appln. KOKAI Publication No. 2002-236763).

A telecommunications system is also proposed in which desired information only can be obtained efficiently from among provided information (e.g., see Jpn. Pat. Appln. KOKAI Publication No. 2002-24273).

In the portable terminal related to the former prior art, the following function is given, namely, when the portable terminal receives the geographical information and use-permission positional information and determines that the portable terminal does not belong to an effective area identified by the received use-permission positional information, it deletes the received geographical information.

Here, the geographical information delivered to the portable terminal is associated with the use-permission positional information. Therefore, a geographical information transmitting party must attach, without fail, restraint information, namely the use-permission positional information, to the geographical information to be transmitted. In addition, when there are provided a plurality of geographical information transmitting parties, no procedure is considered if the portable terminal receiving the geographical information receives the information of the same type.

Moreover, in the system related to the latter prior art, there is provided a function to delete the provided information in which the system constantly checks whether established deletion conditions with respect to the received information in a memory are satisfied or not so that only the provided information needed is stored in the memory.

In this system, deletion conditions are generated by an information receiving party and the information is deleted after the deletion conditions are satisfied. Therefore, the deletion conditions that are set by users are assumed. In addition, when there are provided a plurality of information transmitting parties, as well as the former prior art, no procedure is considered if information of the same type is received.

In other words, in each method of the prior art, since particular conditions are required upon deletion of the received information, as a result, the possibility increases in which unnecessary information is accumulated within a communication device such as a portable terminal.

An object of the presence invention is to provide a communication device that has a function to automatically delete information that becomes unnecessary among information received through wireless communication.

The communication device comprises an antenna module which receives information transmitted through wireless communication and includes a receiver sensitivity measuring function; a determining unit which determines effectiveness of the received information in accordance with the receiver sensitivity measured by the antenna module; a category determining unit which determines a category of the received information; a storage unit which stores the received information as effective information in accordance with determining results of the determining unit and the category determining unit; and an information deletion unit which deletes information of the same category received prior to the latest received information from the storage unit.

This summary of the invention does not necessarily describe all necessary features so that the invention may also be a sub-combination of these described features.

The invention can be more fully understood from the following detailed description when taken in conjunction with the accompanying drawings, in which:
FIGS. 1A and 1B are diagrams that describe an outline of an information providing system in accordance with an embodiment of the invention.
FIG. 2 is a block diagram that shows main parts of a communication device and an information providing apparatus in accordance with the embodiment.
FIG. 3 is a flowchart that describes a procedure for information management in accordance with the embodiment.
FIG. 4 is a flowchart that describes a procedure for information processing of the communication device in accordance with the embodiment.
FIG. 5 is a conceptual diagram in accordance with another embodiment.
FIG. 6 is a flowchart that describes a procedure for information processing of the communication device in accordance with another embodiment.

Now, with reference to the drawings, embodiments of the invention will be described.

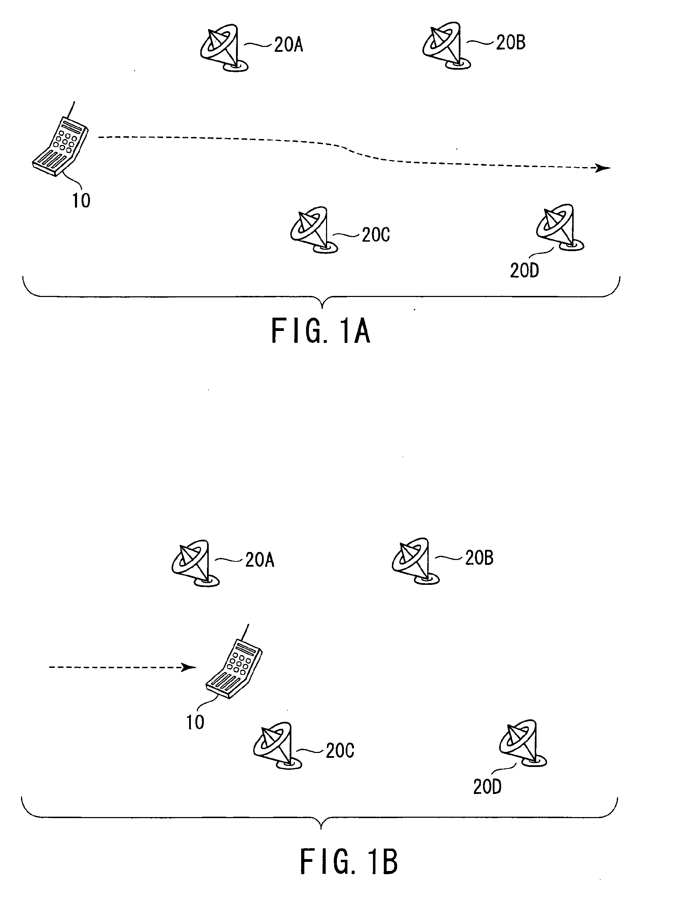

FIG. 1 describes an outline of an information providing system in accordance with the embodiment.

A communication device in accordance with the embodiment is a portable terminal 10 that has a wireless communication function. As shown in FIG. 1A and FIG. 1B, the portable terminal 10 has the function in which information delivered, through wireless communication, from a plurality of wireless communication base stations (20A to 20D) that correspond to respective information providing apparatuses, is received and employed.

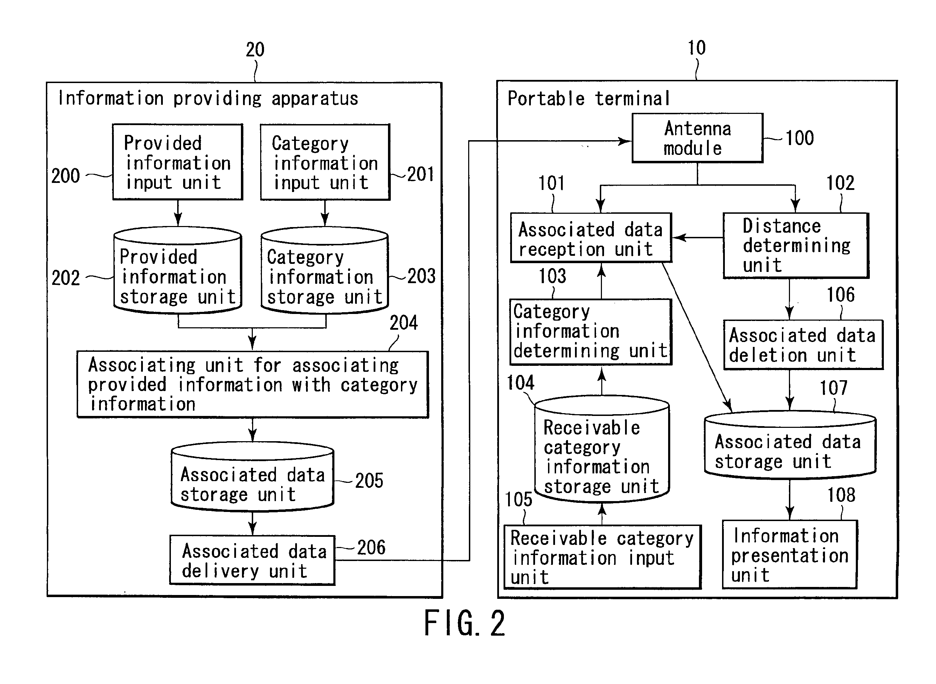

FIG. 1A shows state in which the portable terminal 10 moves to respective areas covered by respective wireless communication base stations (20A to 20D) along with a moving user (dashed line arrow). The portable terminal 10 utilizes information delivered from the wireless communication base station (20A to 20D) that is located at a relatively short distance as effective information. As mentioned below, the portable terminal 10 determines, using a function measuring receiver sensitivity (i.e., strength of received radio wave) included in an antenna module, the wireless communication station (20A to 20D) that is located at the relatively short distance (See FIG. 2).

Here, for example, geographical information is assumed as the information provided by the respective information providing apparatuses. This geographical information shall be the information that corresponds to the communication areas covered by the wireless communication base station (20A to 20D).

To be more precise, as shown in FIG. 1A, the portable terminal 10 receives the information (geographical information) from the wireless communication base station 20A that is located at the relatively short distance as the effective information to store it in an internal memory. The portable terminal 10 executes processing so that the received geographical information is displayed on a display. Hereby, the user can refer to a map whose effective area is only the area that is based on the provided geographical information.

Next, as shown in FIG. 1B, along with the moving user, the portable terminal 10 receives the information (geographical information) from, for example, the wireless communication base station 20C that is located at the relatively short distance as the effective information and stores it in the internal memory. Hereby, the user can refer to the map whose effective area is only the area where the user moved.

Here, for the portable terminal 10, after its movement, information received prior to its movement (here, it means the geographical information from the wireless communication base station 20A) generally becomes unnecessary information. Therefore, in the embodiment, the portable terminal 10 deletes the information that becomes unnecessary (i.e., information received prior to its movement) from the internal memory. Hereby, a use rate and information processing efficiency of the internal memory in the portable terminal 10 can be improved. In addition, the user can constantly employ only the latest and effective geographical information using the portable terminal 10.

### (Structure and operation of the portable terminal and the information providing apparatus)

Hereinafter, the concrete structure and operation of the embodiment will be described with reference to FIG. 2 to FIG. 4.

FIG. 2 is a block diagram that shows the structures of the portable terminal 10 and the information providing apparatus 20, respectively.

The information providing apparatus 20 is what is called a server and includes a provided information input unit 200, a category information input unit 201, a provided information storage unit 202, a category information storage unit 203, an associating unit 204, an associated data storage unit 205 and an associated data delivery unit 206. The information providing apparatus 20 is designed by the structure comprising software and a CPU executing the relevant software or by hardware configuration such as the memory and storage (disk drive) or the like.

The provided information input unit 200 receives the information to be provided (here, it means the geographical information.) and stores it in the provided information storage unit 202. The category information input unit 201 receives the category information that indicates the category of the information to be provided (here, it means the map) and stores it in the category information storage unit 203. Here, the provided information storage unit 202, the category information storage unit 203 and the associated data storage unit 205 mean, for example, a hard disk drive or the like.

The associating unit 204 associates the information (geographical information) that is to be provided and is stored in the provided information storage unit 202 with its category information that is stored in the category information storage unit 203, then stores it in the associated data storage unit 205. The associated data delivery unit 206 delivers associated information (geographical information and its category information) that is stored in the associated data storage unit 205 through the wireless communication base station (20A to 20D).

The portable terminal 10 includes an antenna module 100 for receiving the radio wave transmitted from the wireless communication base station (20A to 20D), an associated data reception unit 101, a distance determining unit 102, a category information determining unit 103, a receivable category information storage unit 104 and a receivable category information input unit 105.

The antenna module 100 includes the receiving function receiving the information, in the form of radio waves, that is delivered from the information providing apparatus 20, while including the measuring function measuring the receiver sensitivity corresponding to the strength of the relevant received radio wave. The distance determining unit 102 determines the distance from the wireless communication base station (20A to 20D) of the information providing apparatus 20 in accordance with the receiver sensitivity that is measured with the antenna module 100. To be more precise, the distance determining unit 102 generates determining information identifying the wireless communication base station (20A to 20D) that is located at the relatively short distance.

The associated data reception unit 101 has a function determining whether the information (associated information) received with the antenna module 100 is received or not and stores the received information in an associated data storage unit 107. The associated data reception unit 101 determines reception of the received information (authentic reception) based on a determining result from the distance determining unit 102 and a determining result from the category information determining unit 103.

That is to say, the associated data reception unit 101 receives the information in accordance with the determining result from the category information determining unit 103 when the category information included in the associated information received matches a predetermined category information, while the reception is rejected when mismatch occurs. In addition, the associated data reception unit 101 receives, in case of the information of the same category, the information from the information providing apparatus 20 that is located at the relatively short distance in accordance with the determining result from the distance determining unit 102.

The category information determining unit 103 compares receivable category information that is input by the category information input unit 105 and is stored in the receivable category information storage unit 104 with the category information tentatively received at the associated data reception unit 101. The category information input unit 105 inputs the category information that is previously transmitted from outside through the antenna module 100 or the category information that is input from an input apparatus (not shown) of the portable terminal 10 by the user into the receivable category information storage unit 104.

Moreover, the portable terminal 10 has an associated data deletion unit 106 and an information presentation unit 108. The information presentation unit 108 executes processing by which the information that is stored in the associated data storage unit 107 is displayed on the display, for example, provided on the portable terminal 10, or the like. Using this information presentation unit 108, the user can refer to the received geographical information on the display.

The associated data deletion unit 106 deletes the information determined to be unnecessary from among the information that is stored in the associated data storage unit 107. To be more precise, when the associated data deletion unit 106 receives, in accordance with the determining result from the distance determining unit 102, the information from the information providing apparatus 20 that is located at the relatively short distance, it deletes all the information (information of the same category) that is previously received and is stored in the associated data storage unit 107. The distance determining unit 102 constantly monitors, in accordance with the receiver sensitivity measured with the antenna module 100, the distance from the information providing apparatus 20 (wireless communication base station (20A to 20D) .

In addition, the portable terminal 10 is designed by the structure including the software, the CPU that executes the relevant software and the internal memory (such as flash EEPROM). The associated data storage unit 107 is a component that corresponds to the internal memory.

### (Operation of the portable terminal)

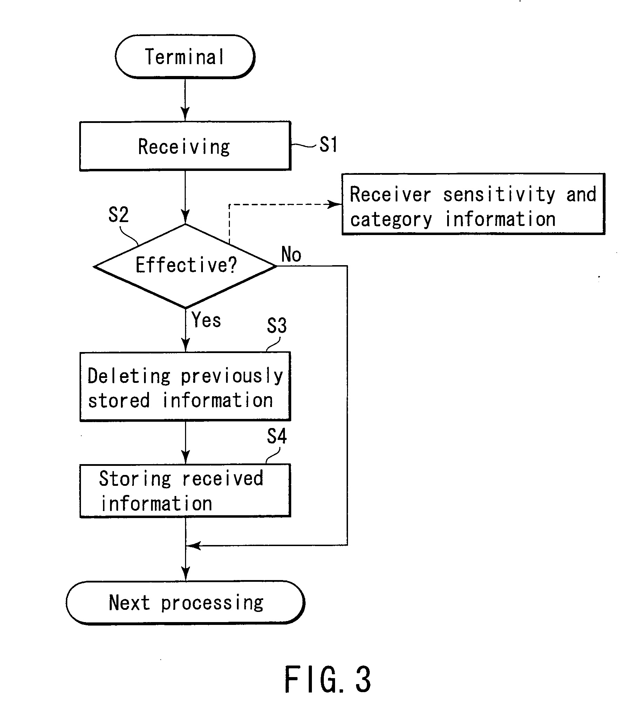

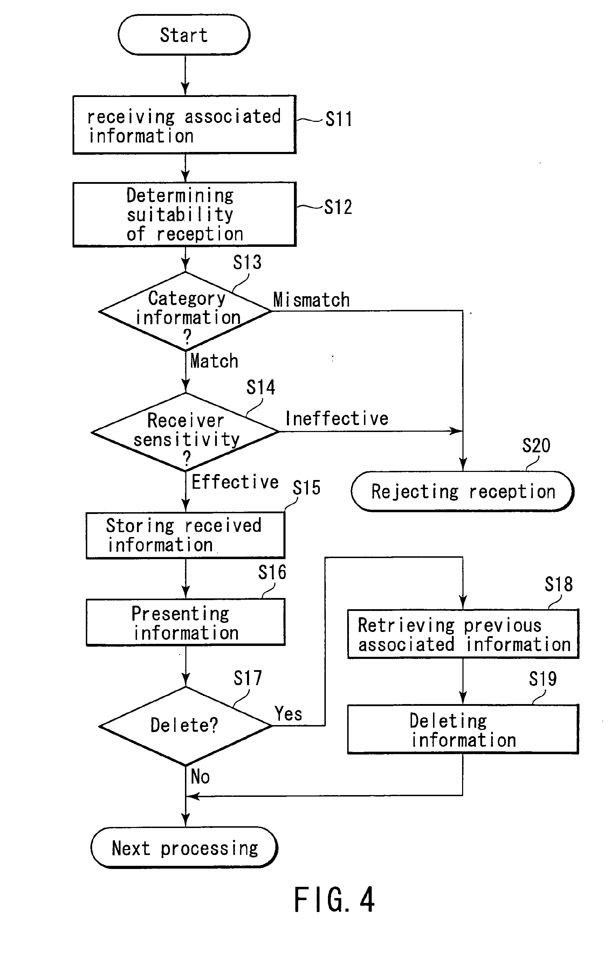

Next, the operation of the portable terminal 10 in accordance with the embodiment will be described with reference to FIG. 3 and FIG. 4.

First, basic operation in accordance with the embodiment will be described with reference to a flowchart of FIG. 3.

When the portable terminal 10 receives the radio wave with the antenna module 100, the associated data reception unit 101 determines whether the received information is effective or not (receivable or not)(Step S1 and S2). The associated data reception unit 101 determines it, as mentioned above, in accordance with both measured result of the receiver sensitivity at the antenna module 100 and the category information (information indicating that it is the geographical information) included in the associated information received.

To be more precise, in accordance with the measured result of the receiver sensitivity, the associated data reception unit 101 regards the information as effective, the information being delivered from the information providing apparatus 20 located at the relatively short distance. For more detail, when the portable terminal 10 is located on a position as shown in FIG. 1A, the information that is delivered from the information providing apparatus 20 corresponding to the wireless communication base station 20A. It is needless to say that the associated data reception unit 101 regards the information as ineffective regardless of content of the information when the receiver sensitivity does not exceed a given level.

Furthermore, when the mismatch occurs between the category information included in the associated data received and the category information (map) previously stored in the receivable category information storage unit 104, the associated data reception unit 101 determines that it is not effective (NO in step S2). In this case, the portable terminal 10 executes other processing until it receives the effective information.

The associated data reception unit 101 determines the received geographical information to be effective and receives it, and then stores the information in the associated data storage unit 107 (YES in Step S2 and Step S4). Hereby, with the information presentation unit 108 of the portable terminal 10, the user can refer to the received geographical information on the display.

In this embodiment, when the associated data reception unit 101 receives the effective geographical information, the associated data deletion unit 106 deletes the geographical information (information of the same category) that is previously received prior to the current point of time of reception (the latest point of time of reception) and stored in the associated data storage unit 107 (Step S3). For example, as shown in FIG. 1B, a case is assumed in which, along with the moving portable terminal 10, the information is received from the information providing apparatus 20 that corresponds to the wireless communication base station 20C. In the above-mentioned case, the information that is delivered from the information providing apparatus 20 corresponding to the wireless communication base station 20A is deleted from the internal memory 107, the information being received prior thereto.

Concrete operation of the portable terminal 10 in the embodiment is described with reference to a flowchart of FIG. 4.

When the antenna module 100 receive the radio waves, the associated data reception unit 101 executes the determining of suitability whether it is receivable or not (Steps S11 and S12). When the mismatch occurs between the category information included in the associated information received and the category information previously stored in the category information storage unit 104, reception is rejected by the associated data reception unit 101 in accordance with the determining result from the category information determining unit 103 (Steps S13 and S20).

When both pieces of the category information match, the associated data reception unit 101 receives the information as effective in accordance with the determining result (receiver sensitivity) of the distance determining unit 102, the information being from the information providing apparatus 20 located at the relatively short distance (Step S14). As a matter of course, reception of the information that is from the information providing apparatus 20 located at a relatively long distance is rejected even if the category is the same (Step S20).

The associated data reception unit 101 stores the received information (geographical information) in the associated data storage unit 107 (Step S15). The information presentation unit 108 executes processing such as displaying the information stored in the associated data storage unit 107 on the display, for example, provided on the portable terminal 10, or the like (Step S16). With this information presentation unit 108, the user can refer to the received geographical information on the display.

In the portable terminal 10, when the effective geographical information is received by the associated data reception unit 101, the associated data deletion unit 106 is activated (YES in Step S17). The associated data deletion unit 106 retrieves the associated data storage unit 107 and deletes the geographical information that is received prior to the current point of time of reception (the latest point of time of reception)(Step S18 and S19).

As described above, in accordance with the embodiment, when the information (geographical information) of the predetermined category (e.g., map) is received as effective, the information of the same category (e.g., geographical information in different area) that is previously received and stored can be deleted from the internal memory 107.

In consequence, the user's operation is not necessary and the unnecessary information can be automatically deleted from the portable terminal 10. Hereby, the portable terminal 10 can omit the processing for displaying the unnecessary information for the user. In addition, since the unnecessary information can be deleted from the internal memory 107 of the portable terminal 10, the use rate of the internal memory 107 can be improved.

Here, the associated data deletion unit 106 of the embodiment may delete, in accordance with the determining result (receiver sensitivity) from the distance determining unit 102, the received information as unnecessary, the received information being the information received when the distance changes from the relatively short distance to a long distance. In this case, an operation may be possible in which at the stage when communication to the information providing apparatus located at the relatively short distance is established, the previous information is not deleted immediately but is temporarily stored and is deleted at the stage when a certain distance arises.

In addition, the portable terminal 10 may include the structure having a function in which the information received from respective information providing apparatuses is not deleted immediately but stored in the internal memory, and then the plurality of pieces of information are displayed on the display, the pieces of information being weighted according to the distance from the information providing apparatuses.

Furthermore, the portable terminal 10 does not delete information previously received but stores it in the internal memory after attaching a possible deletion index to it. Then, the portable terminal 10 deletes the information only to which the possible deletion index is attached at the time there is a shortage of internal memory capacity.

Moreover, at the stage when the communication to the information providing apparatus located at the relatively short distance is established, the portable terminal 10 does not receive and store the information received from the apparatus, yet retrieves the internal memory. The portable terminal 10 may have structure in which when the portable terminal succeed in retrieving the information from the internal memory, then the information can be used intact. Here, when the possible deletion index is attached to the information, the possible deletion index is deleted.

Although the portable terminal 10 in accordance with the embodiment is assumed to be standard mobile phones and personal digital assistants (PDAs), the embodiment is not limited thereto and dedicated terminals, for example, applicable to portable type navigation can also be assumed.

### (Another embodiment)

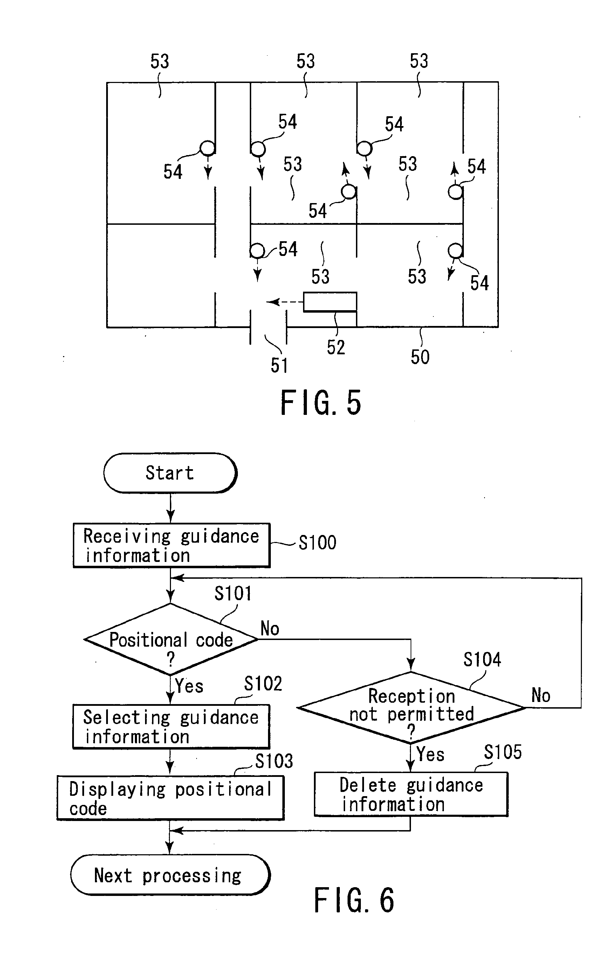

FIG. 5 and FIG. 6 describe another embodiment.

The embodiment relates to the portable terminal 10 that receives positional information transmitted from a wireless communication device 54 (wireless chip), instead of the wireless communication base station, the wireless communication device 54 having a short distance wireless communication function in a narrow area such as exhibition hall and so on. In addition, the basic structure of the portable terminal 10 is the same as the one that is shown in FIG. 2.

The wireless communication device 54 is a small sized device which includes a wireless communication circuit that transmits identification code information such as a positional code. In the embodiment, as shown in FIG. 5, an exhibition hall 50 in which plural booths are placed is assumed. Respective booths 53 are exhibition areas to present different products and services, respectively.

The wireless communication device 54 is placed with respect to each booth 53 and constantly transmits the identification code information (positional code information) to identify a position of each booth 53. Moreover, in the embodiment, an information providing apparatus 52 that delivers guidance information of each booth 53 is placed, for example, in the vicinity of an entrance 51 of the exhibition hall 50. The information providing apparatus 52 is basically the same as the one that is shown in FIG. 2 while aforementioned positional code information with respect to each booth 53 is used as the information corresponding to the category information.

### (Operation of another embodiment)

Hereinafter, mainly with reference to a flowchart in FIG. 6, the operation of the embodiment will be described.

First, when the user enters the exhibition hall 50 through the entrance 51, the portable terminal 10 receives the guidance information that is delivered from the information providing apparatus 52 (Step S100). At the time, the portable terminal 10 receives the guidance information that is associated with the positional code information and stores it in the internal memory.

Next, when the portable terminal 10 moves within the exhibition hall 50 along with the user, it receives the positional code information transmitted from the wireless communication device 54 placed with respect to each booth 53. At the time, as mentioned above, the portable terminal 10 receives the positional code information as effective in accordance with the receiver sensitivity measured with the antenna module, the positional code information being transmitted from the wireless communication device 54 located at the relatively short distance (YES of Step S101).

The portable terminal 10 retrieves the guidance information from the internal memory, the guidance information corresponding to the received positional code information (Step S102). The portable terminal 10 executes the processing displaying the relevant guidance information on the display (Step S103).

Hereby, the user can refer to the guidance information on the display of the portable terminal 10, the guidance information being the information from the nearest located booth 53. Therefore, for example, the user can judge, in accordance with the relevant guidance information, whether the booth is the desired booth or not and when he does not have interest in the booth, he can move to the other booths.

On the other hand, after receiving the guidance information regarding the positional code information when the portable terminal 10 cannot receive the relevant positional code information, the portable terminal 10 deletes the guidance information that is stored in the internal memory (YES in Step S104, and S105). As mentioned above, based on the receiver sensitivity measured with the antenna module, when reception level does not exceed a given level, the portable terminal 10 determines that the relevant positional code information cannot be received.

Here, when the portable terminal 10 cannot receive the positional code information correctly within a predetermined time interval, the portable terminal 10 makes a transition to the processing to delete the guidance information stored in the internal memory. Even if the guidance information stored in the internal memory is once deleted, the portable terminal 10 can restore the relevant guidance information by moving in the vicinity of the entrance 51 again to receive the guidance information from the information providing apparatus 52.

As mentioned above, it follows that, for example, when the portable terminal 10 in the embodiment cannot receive the positional code information which is effective only within the area in the exhibition hall 50 after receiving and storing the guidance information which is effective only within the area in the exhibition hall 50, it deletes the relevant guidance information.

To be more precise, when the user goes out of the exhibition hall 50, the portable terminal 10 automatically deletes the relevant guidance information because it cannot receive the positional code information. Hence, outside the exhibition hall 50, the relevant information that becomes unnecessary can be deleted from the portable terminal 10. If the user hopes to restore the deleted guidance information, it can be realized by receiving the guidance information again at the exhibition hall 50.

In addition, although the embodiment relates to an information management method in which the guidance information at the exhibition hall 50 is associated with the positional code information, the embodiment is not limited thereto and it can be applied to the information management method in a narrow area, for example, a theme park or the like. Moreover, in the embodiment, although the portable terminal has the structure in which the stored guidance information is deleted when it cannot receive the positional code information, the embodiment is not limited thereto. For example, one structure may be possible in which, when the portable terminal 10 receives the information that indicates deletion of the guidance information, it deletes the stored guidance information.

As described above in detail, in accordance with the embodiment, when the information of the same category is received from a plurality of information providing parties to utilize, all the information other than the latest information is deleted. Moreover, among the information that is received prior to the latest point of time of reception, information that is shifted from effective to ineffective is deleted. Therefore, as a result, unnecessary information can be automatically deleted from the communication device.

## Claims

1. A communication device, **characterized by** comprising:
an antenna module (100) which receives information transmitted through wireless communication and includes a receiver sensitivity measuring function;
a determining unit (101) which determines effectiveness of the received information in accordance with the receiver sensitivity measured by the antenna module (100);
a category determining unit (103) which determines a category of the received information;
a storage unit (107) which stores the received information as effective information in accordance with determining results of the determining unit (101) and the category determining unit (103); and
an information deletion unit (106) which deletes information of the same category received prior to the latest received information from the storage unit (107) .

2. The communication device according to claim 1, **characterized in that**
if a plurality of sending devices of the information are provided, the determining unit (101) determines information transmitted from a sending device located at a relatively short distance to be effective by calculating distances from the sending devices of the information in accordance with the receiver sensitivity.

3. The communication device according to claim 1, **characterized by** further comprising;
a category information storage unit (104) which stores category information indicating the category of the effective information, wherein
the category determining unit (103) determines the relevant received information to be effective when the category of the information received with the antenna module (100) matches the category indicated by the category information.

4. The communication device according to claim 1, **characterized in that**
the information deletion unit (106) deletes previous information of the same category as the information from the storage unit (107) before the effective information is stored in the storage unit (107) .

5. The communication device according to claim 1, **characterized in that**
the information deletion unit (106) deletes previous information of the same category as the information from the storage unit (107) after effective and receivable information is stored in the storage unit (107).

6. The communication device according to claim 1, **characterized in that**
if a plurality of sending devices of the information are provided, the determining unit (101) determines information transmitted from a sending device located at a relatively short distance to be effective by calculating distances from the sending devices of the information in accordance with the receiver sensitivity, and
the information deletion unit (106) deletes previous information of the same category as the information from the storage unit (107) before the effective information is stored in the storage unit (107) .

7. The communication device according to claim 1, **characterized in that**
the determining unit (101) determines the information only of a particular category delivered from a wireless communication base station located at a relatively short distance to be effective,
the storage unit (107) stores the information of the particular category determined to be effective by the determining unit (101), and
the information deletion unit (106) deletes, from the storage unit (107) the information of the particular category that is received from the wireless communication stations other than the wireless communication station located at the relatively short distance.

8. A method of managing information applicable to a communication device (10) having an antenna module (100) which receives information transmitted through wireless communication and includes a receiver sensitivity measuring function, and a storage unit (107) to store the information, **characterized by**
the method comprising steps of:
determining (S2) effectiveness of the information in accordance with the receiver sensitivity measured with the antenna module;
determining (S2) a category of the received information; and
deleting (S3) information of the same category received prior to the latest received information from the storage unit.

9. A method according to claim 8, **characterized by** further comprising steps of:
receiving (S11) information of a particular category delivered from a plurality of wireless communication stations placed on plurality of places with the antenna module;
determining (S12,S13) the information only of the particular category delivered from a wireless communication station located at a relatively short distance to be effective in accordance with the receiver sensitivity measured with the antenna module, if the plurality of wireless communication base stations are provided;
storing (15) the information of the particular category determined to be effective by the effectiveness determining in the storage unit; and
deleting (19) previous information of the same category as the relevant information from the storage unit before the effective information is stored in the storage unit.

10. A method according to claim 9, **characterized in that**
the deleting step (19) is to delete, from the storage unit, the information of the particular category received from the wireless communication base stations other than the wireless communication base station located at the relatively short distance in accordance with a determining result of the effectiveness determining.

11. A method according to claim 9, **characterized in that**
the deleting step (19) is to retrieve and delete all the information of the particular category from the storage unit when the information of the particular category determined to be receivable and effective is stored in the storage unit.

12. A method according to claim 8, **characterized by** further comprising steps of:
receiving (S100) , with the antenna module, identification code information delivered from a plurality of wireless communication devices placed with respect to each predetermined area;
storing (S100) information corresponding to the identification code information received with the antenna module in an internal storage unit;
selecting (S102), from the internal storage unit, the information corresponding to the identification code information received from a wireless communication device located at a relatively short distance among the respective wireless communication devices;
determining (S104) suitability of reception of the identification code information from the respective wireless communication devices; and
deleting (S105) all the information regarding the identification code information stored in the internal storage unit when the reception of the identification code information from the respective wireless communication devices is not possible.

13. A method according to claim 12, **characterized in that**
the identification code information is information to identify a position of the area on which the respective wireless communication devices are placed.
